Europäisches Patentamt

European Patent Office

Office européen des brevets

(19)

(11) Numéro de publication: **0 279 128**
**A1**

(12) ## DEMANDE DE BREVET EUROPEEN

(21) Numéro de dépôt: **87400557.2**

(22) Date de dépôt: **19.02.87**

(51) Int. Cl.4: **G06K 7/06** , G06K 13/08

(43) Date de publication de la demande:
**24.08.88 Bulletin 88/34**

(84) Etats contractants désignés:
**ES GR**

(71) Demandeur: **Société SURVY S.a.r.l.**
**2ter rue Spitalieri**
**F-06000 Nice(FR)**

(72) Inventeur: **Wainman, Nicholas**
**61bis Avenue de la Corniche fleurie**
**F06000 Nice(FR)**
Inventeur: **Legrand, Marc**
**Avenue Louis Blériot**
**F 06800 Cagnes S/Mer(FR)**
Inventeur: **Garofalo,Sauveur**
**50 Avenue Pessicart**
**F 06000 Nice(FR)**

(74) Mandataire: **Lepeudry-Gautherat, Thérèse et**
**al**
**ARMENGAUD JEUNE CABINET LEPEUDRY 6,**
**rue du Fg. St-Honoré**
**F-75008 Paris(FR)**

(54) **Dispositif de connexion de signaux électroniques sur cartes à mémoire du type comportant un microcircuit.**

(57) L'invention concerne un dispositif de connexion des signaux électroniques de cartes à mémoire.

L'axe(7)du bloc de connexion pivotant(1)est monté sur deux potences (4) elles-mêmes pivotantes autour d'un axe principal fixe (8), un électro-aimant (5) assurant le pivotement de l'ensemble, entre une position travail où le bloc de connexion est en mesure de s'appliquer contre la carte et une position repos où le bloc de connexion est écarté du trajet de cheminement de la carte.

Application aux cartes du type comportant un microcircuit.

FIG.1

## DISPOSITIF DE CONNEXION DE SIGNAUX ELECTRONIQUES SUR CARTES A MEMOIRE DU TYPE COMPORTANT UN MICROCIRCUIT.

L'invention qui se rapporte à un dispositif de connexion destiné à la transmission de signaux électroniques recueillis aux sorties d'un microcircuit incorporé dans une carte à mémoire concerne plus particulièrement un bloc de connexion pivotant permettant soit d'établir la connexion soit de libérer la carte sans solliciter le système de connexion.

On sait que des cartes électroniques portatives du genre et du format des cartes de crédit portent des microcircuits qui sont incorporés dans la carte. Les points de liaison de ces circuits sont des pastilles métalliques regroupées ensemble en surface d'un même côté de la carte. Pour établir le contact électrique entre ces circuits de la carte et l'appareillage électrique du dispositif de transfert, il faut que des contacts élastiques conducteurs viennent en pression sur les sorties de la pastille affleurant la surface de la carte. Pour que la connexion s'effectue correctement, il faut veiller à ce que l'application des contacts soit rapide, précise, et puisse compenser l'usure ou l'encrassement des surfaces de contact.

Pour cela on connaît des blocs de connexion fixes dans lesquels la liaison est établie en glissant la carte dans une fente ou un guide en direction des contacts élastiques. Dans d'autres dispositifs la carte est amenée en butée dans un lecteur et un bloc de connexion se déplaçant en translation vient s'appliquer contre la carte immobilisée. On connaît aussi un dispositif qui consiste à monter les contacts électriques sur une barrette pivotante qui, en position ouverte permet à une carte de se placer en butée et qui en position fermée après pivotement applique ces contacts contre la carte immobilisée comme décrit dans le WO-A-79 00543. Tous ces systèmes conviennent pour des cartes à microcircuit et constituent des ensembles indépendants conçus pour cela, et qui viennent en sus des lecteurs classiques de cartes à pistes magnétiques.

L'invention apporte une solution qui présente de multiples avantages sur les systèmes connus en ce qu'elle propose un sous-ensemble adaptable par exemple à un lecteur de cartes magnétiques qui permet de traiter aussi bien ces cartes cartes magnétiques que les cartes à microcircuit dans toutes les positions reconnues à ce jour. A cette fin le dispositif selon l'invention est conçu de telle manière que le dispositif de connexion des signaux électroniques recueillis aux sorties du microcircuit, soit déplaçable d'une façon particulière entre deux positions : une première position de repos où il s'écarte du trajet de cheminement de la carte, et où celle-ci peut se déplacer librement dans l'appareil, être avalée, ou ramenée dans la zone de lecture de pistes magnétiques; ou une seconde position travail dans laquelle il est amené automatiquement lors du déplacement de la carte pour que les contacts élastiques soient mis en position.

Un objet de la présente invention consiste donc en un dispositif de connexion de signaux électroniques sur carte à mémoire du type comportant un microcircuit relié à des pastilles de contact, comprenant un bloc de connexion muni de contacts élastiques pivotant autour d'un axe pour que les contacts viennent en appui sur lesdites pastilles, dispositif selon lequel l'axe du bloc de connexion est monté sur deux potences, elles-mêmes pivotantes autour d'un axe principal fixe, un organe moteur assurant le pivotement desdites potences autour de l'axe, entre une position travail où le bloc de connexion est en mesure de s'appliquer contre la carte et une position repos où le bloc de connexion est écarté du trajet de cheminement de la carte.

Selon une caractéristique de l'invention l'organe moteur est un électroaimant dont la bielle mobile est reliée à une des potences par un bras, la hauteur de l'écart du bloc de connexion par rapport au trajet de cheminement de la carte étant réglé par une butée montée sur l'arbre du noyau mobile de l'électroaimant et qui ajuste la course de la bielle solidaire dudit noyau.

Une autre caractéristique principale de l'invention consiste dans le fait que l'extrémité des potences forme un bec constituant un appui pour l'extrémité de la carte, celle-ci étant pincée par la poussée des contacts élastiques quand le bloc de connexion s'applique contre elle.

Selon encore une autre caractéristique de l'invention, le câble souple de liaison reliant les plots du bloc de connexion à une carte de contrôle, est précontrainte et exerce un effet de ressort sur le bloc de connexion.

D'autres caractéristiques particulières et avantages de l'invention apparaîtront à la lecture de la description qui va suivre d'une forme de réalisation prise à titre d'exemple non limitatif et faisant référence aux dessins annexés qui représentent :

- figure 1 : une vue en perspective partiellement écorchée du dispositif de connexion
- figure 2 : une vue schématique en coupe du dispositif en position repos
- figures 3 et 4 : des vus schématiques en coupe du dispositif en position travail avant l'arrivée de la carte puis après, avec la carte en butée.

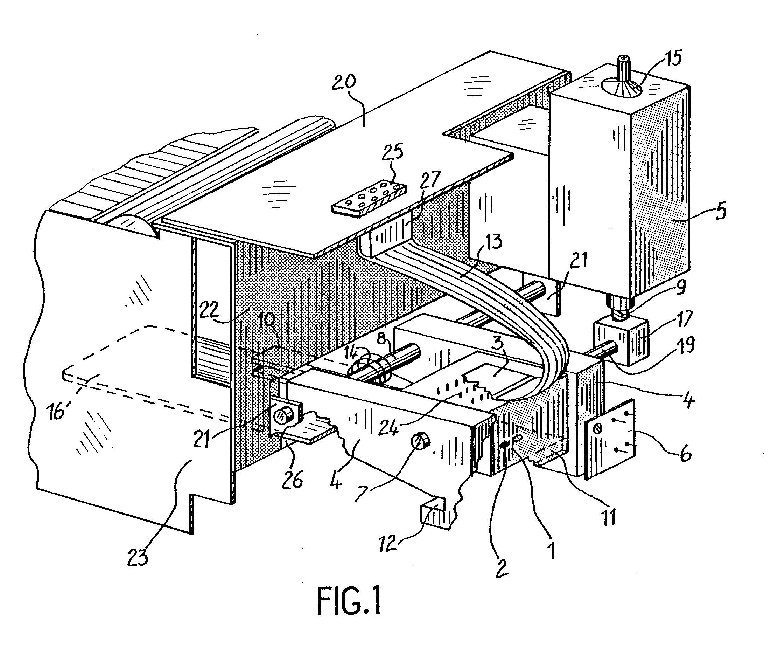

On a représenté à la figure 1 un sous-ensemble monté sur un flasque 22 rapporté sur un bâti 23 renfermant les mécanismes non représentés d'admission, de guidage et de lecture d'une carte à mémoire 16. Cette carte 16 sort du flasque par un orifice 26, en coulissant dans un guide latéral 10. La carte présente sur sa face supérieure les sorties d'un microprocesseur en forme de pastille introduite dans l'épaisseur du plastique. Ce sous-ensemble est essentiellement constitué d'un bloc de connexion 1 se présentant comme une pièce parallélépipédique présentant à sa partie inférieure une languette 11 horizontale, au droit de la face frontale du bloc, du côté opposé au flasque 22. La partie inférieure du bloc porte des rangées de contacts élastiques 2 auxquels correspondent à sa partie supérieure des plots 24. Un connecteur 3 embroché sur ces plots est relié par un câble de liaison souple 13 à la tête de connexion 25 d'une carte de contrôle et de traitement 20 rapportée sur le flasque 22. Ledit câble 13 forme une boucle entre le connecteur et la tête de connexion. A proximité de cette dernière, est prévue une butée 27 dont le profil inférieur est arrondi, et sur laquelle vient en appui l'extrémité de ce câble 13, ce qui confère au brin supérieur de la boucle une orientation particulière, assurant la précontrainte du câble lui permettant d'exercer un effet de ressort sur le bloc 1. Celui-ci est monté pivotant sur un axe transversal 7 en appui de part et d'autre sur deux potences 4 elles-mêmes articulées par une de leurs extrémités sur un axe principal fixe 8 localisé au-dessus de l'orifice 26 et monté parallèlement au flasque 22 sur deux oreilles 21. L'extrémité de chaque potence 4 du côté opposé à l'axe 8 forme un bec 12 orienté vers le flasque, dont l'ouverture, en position basse des potences, se trouve au niveau de l'orifice 26. Une des potences 4 est reliée par un bras 19 à la bielle 17 d'un électroaimant 5 fixé sur le flasque 22 et dont le noyau mobile verticalement lève la bielle 17, quand l'électroaimant est excité, à l'encontre de la force d'un ressort de rappel 9. Une butée réglable 15 sur l'arbre du noyau mobile permet de régler le débattement de la bielle 17 et par conséquent l'écart entre la position haute des potences et le trajet de cheminement de la carte. Un microinterrupteur 6 ou une fourche optoélectronique est en outre rapportée à l'extrémité d'une potence 4. Des entretoises 14 sont en outre emmanchées sur l'axe principal 8 et permettent de régler ainsi l'écartement des potences en fonction des normes de cartes utilisées, l'ensemble du dispositif pouvant aussi être déplacé latéralement sur l'axe 8 ce qui a pour effet de modifier latéralement la position des contacts 2. Les entretoises 14 forment en outre des butées vis-à-vis du pivotement du bloc 1.

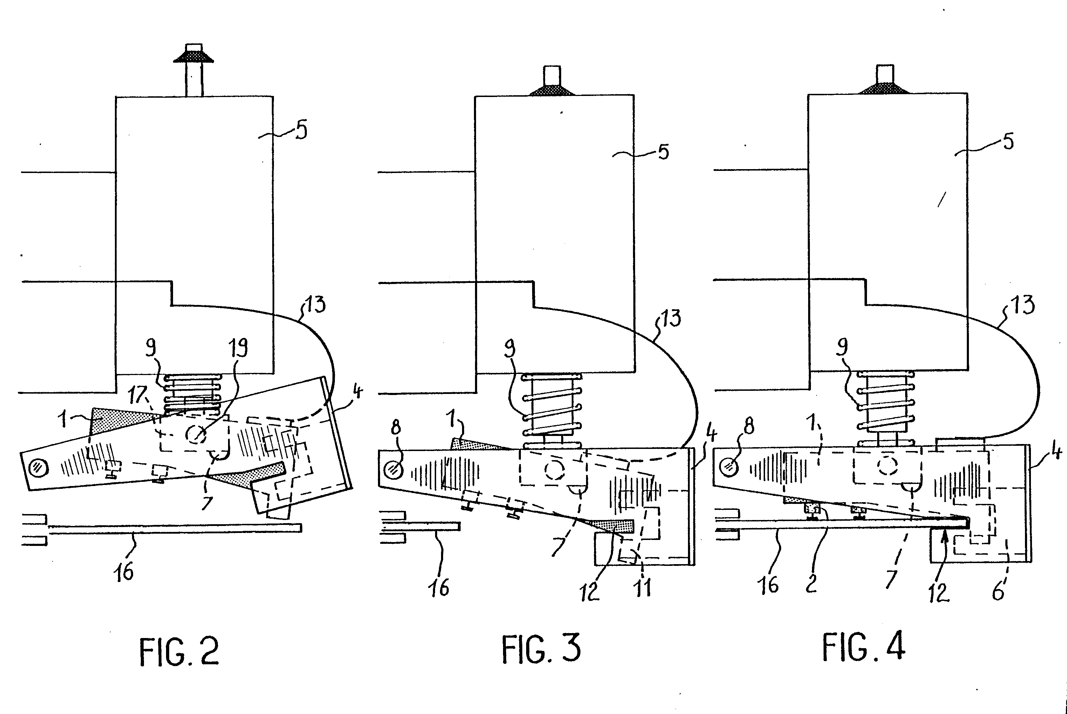

En se référant également aux figures 2 à 4, on explique maintenant le fonctionnement du dispositif de connexion.

Quand l'électroaimant 5, dont le circuit est commandé par un signal extérieur, est excité, son noyau est attiré vers le haut et soulève la biellette 17 à l'encontre de la force du ressort 9. Le bras 19 transmet ce mouvement de levée à la potence voisine 4 solidaire du bloc de connexion 1 et de l'autre potence par l'axe 7. Cet ensemble mobile occupe donc la position représentée à la figure 2, c'est-à-dire qu'il est basculé vers le haut laissant le libre passage à la carte 16 qui passe au-dessous du bloc de connexion et des potences et qui peut ainsi dépasser le dispositif, être avalée par l'appareil, cyclée ou restituée sans être gênée dans son mouvement.

Quand l'électroaimant 5 n'est plus excité, toujours sous la commande d'un signal extérieur et quand il convient d'assurer la lecture d'une carte à microcircuit, le ressort de rappel 9 ramène les potences 4 dans la position basse représentée à la figure 3 après pivotement autour de l'axe 8. par contre le bloc de connexion 1 occupe toujours une position inclinée sous l'action du câble de liaison précontraint 13 faisant office de ressort. La carte 16, lorsqu'elle avance dans son guide 10, sous l'action de rouleaux moteurs non représentés, va pénétrer sous le bloc 1 en position inclinée. Poursuivant son mouvement la tranche de la carte va rencontrer la face inférieure inclinée du bloc 1, provoquant le basculement de ce dernier autour de l'axe 7. Par conséquent plus la carte avance, plus le bloc de connexion bascule. Puis elle atteint la languette 11 ce qui fait terminer le basculement. Les contacts élastiques 2 viennent alors s'appliquer contre les sorties du microcircuit affleurant le sommet de la carte.

La dernière phase d'avancée de la carte 16 est illustrée par la figure 4. La carte en effet s'est engagée dans les becs 12 des potences 4 et vient en butée en fin de course contre le fond desdites becs constituant un appui. Cette position est alors détectée par le microinterrupteur ou la fourche opto-électronique 6, le signal étant alors utilisé pour démarrer le dialogue avec le microprocesseur incorporé dans la carte.

Dans le cas où ce dispositif est monté sur un lecteur motorisé, le signal détecté arrête le moteur et, aussitôt après, autorise le dialogue. On voit sur la figure que les contacts 2 sont en appui sur les sorties du microprocesseur en forme de pastille introduit dans la carte.

En outre cette position est stable. La pression des contacts 2 sur la carte 16, et le fait que cette dernière soit engagée dans le bec 12 faisant butée, font que la carte est pincée ; le bloc de connexion est donc maintenu dans une position assurant un contact correct, la carte n'étant plus sollicitée mécaniquement. La transmission des signaux peut donc se faire en toute sécurité.

Le dialogue étant terminé, la carte 16 repart en arrière et est rendue. Elle se dégage du bec 12 et des contacts 2 et libère le bloc 1 qui, sous l'action du câble 13 revient dans la position de la figure 3, son mouvement de pivotement étant limité par les entretoises 14.

**Revendications**

1. - Dispositif de connexion de signaux électroniques sur carte à mémoire (16) du type comportant un microcircuit relié à des pastilles de contact, comprenant un bloc de connexion (1) muni de contacts élastiques (2), psivotant autour d'un axe (7) pour que les contacts viennent en appui sur lesdites pastilles, caractérisé en ce que l'axe (7) du bloc de connexion (1) est monté sur deux potences (4), elles-mêmes pivotantes autour d'un axe principal fixe (8), et en ce qu'un organe moteur (5) assure le pivotement desdites potences autour de l'axe (8), entre une position travail où le bloc de connexion est en mesure de s'appliquer contre la carte (16) et une position repos où le bloc de connexion est écarté du trajet de cheminement de la carte.

2.-Dispositif de connexion selon la revendication 1, caractérisé en ce que l'organe moteur est un électroaimant (5) dont la bielle mobile (17) est reliée à une des potences (4) par un bras (19).

3.-Dispositif de connexion selon la revendications 1 et 2, caractérisé en ce que la hauteur de l'écart du bloc de connextion (1) par rapport au trajet de cheminement de la carte (16) est réglé par une butée (15) montée sur l'arbre de noyau mobile de l'électro-aimant (5) et qui ajuste la course de la bielle (17) solidaire dudit noyau.

4.-Dispositif de connexion selon la revendication 1, caractérisé en ce que le bloc de connexion (1) présente à sa partie inférieure une languette (11), au droit de sa face frontale, servant de butée à la carte (16).

5.-Dispositif de connexion selon la revendication 1, comportant un câble souple (13) reliant les plots (24) du bloc de connexion (1) à une carte de contrôle, caractérisé en ce que ledit câble de liaison (13) est précontraint et exerce un effet de ressort sur le bloc de connexion (1).

6.-Dispositif de connexion selon la revendication 5, caractérisé en ce que l'extrémité du câble de liaison 13, à proximité de la tête de connexion (25)de la carte de contrôle est en appui sur une butée(27)dont le profil inférieur est arrondi.

7.-Dispositif de connexion selon la revendication 1, caractérisé en ce que l'extrémité de chaque potence, du côté opposé à l'axe (8) forme un bec (12) constituant un appui pour l'extrémité de la carte (16) en position travail.

8.-Dispositif selon les revendications 1 à 7, caractérisé en ce qu'un micro-interrupteur (6) est rapporté à l'extrémité d'une potence (4) pour détecter l'arrivée de la carte en butée.

9.-Dispositif selon la revendication 1, caractérisé en ce que des entretoises (14) sont emmanchées sur l'axe principal (8) pour régler l'écartement des potences (4).

10.-Dispositif selon les revendications 1 et 9, caractérisé en ce que les deux potences (4) peuvent être déplacées latéralement sur l'axe principal (8).

FIG.1

0 279 128

FIG. 2

FIG. 3

FIG. 4

0 279 128

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 198 739  (SOCAPEX) <br> * Figure 5; page 5, ligne 27 - page 6, ligne 24 * | 1,2,4 | G 06 K    7/06 <br> G 06 K   13/08 |
| Y | FR-A-1 536 739  (AMP) <br> * En entier * | 1,2,4 | |
| A | | 3 | |
| A | WO-A-7 900 543  (MORENO) <br><br> * Figures 1,2; page 3, ligne 37 - page 6, ligne 29; page 10, lignes 29-36 * | 1,2,7, 8 | |
| A | FR-A-2 554 977  (CHARNAVEL) <br> * En entier * | 5-8 | |
| A | FR-A-2 477 303  (DASSAULT) <br> * Figures 3-6; page 3, ligne 39 - page 5, ligne 9 * | 1 | |
| E | FR-A-2 593 307  (SURVY) <br><br> * En entier * | 1-4,7- 10 | |

DOMAINES TECHNIQUES RECHERCHES (Int. Cl.4)

G 06 K

Le présent rapport de recherche a été établi pour toutes les revendications

| Lieu de la recherche <br> LA HAYE | Date d'achèvement de la recherche <br> 21-10-1987 | Examinateur <br> FORLEN G.A. |
|---|---|---|